# EUROPÄISCHE PATENTSCHRIFT

(11) **EP 1 370 565 B1**
(45) Veröffentlichungstag und Bekanntmachung des Hinweises auf die Patenterteilung: **13.10.2004**
(21) Anmeldenummer: 02732473.0
(22) Anmeldetag: 12.03.2002
(51) Int. Cl.: C07F 9/40, A23L 1/22, A63J 23/02, A61K 31/465

(54) **VERFAHREN ZUR HERSTELLUNG VON 1-HYDROXY-1, 1-DIPHOSPHONSÄUREVERBINDUNGEN**
METHOD OF PRODUCING 1-HYDROXY-1,1-DIPHOSPHONIC ACID COMPOUNDS
PROCEDE DE FABRICATION DE COMPOSES D'ACIDE 1-HYDROXY-1,1-DIPHOSPHONIQUE

(30) Priorität: 22.03.2001 DE 10114352
(43) Veröffentlichungstag der Anmeldung: 17.12.2003
(73) Patentinhaber: Eucro European Contract Research GmbH & Co. KG, 41460 Neuss (DE)
(72) Erfinder: BLUM, Helmut, 40595 Düsseldorf (DE); GREB, Wolfgang, 40489 Düsseldorf (DE); PUSTOVIT, Yurii, Kyiv, 179 (UA); RÖSCHENTHALER, Gerd-Volker, 28357 Bremen (DE)
(74) Vertreter: Christophersen, Ruth
(86) Internationale Anmeldenummer: PCT/EP2002/002676
(87) Internationale Veröffentlichungsnummer: WO 2002/076515

(56) Entgegenhaltungen:
- EP-A- 0 170 896
- WO-A-01/09146
- DE-A- 19 820 974
- SCHOTH R-M ET AL: "ROUTES TO F3-ETIDRONIC ACID (1-HYDROXY-2,2,2-TRIFLUOROETHYLIDENE- BISPHOSPHONIC ACID), MOLECULAR STRUCTURE OF THE TRIS(TRIMETHYLSILYL)ESTER, ANTIMINERALIZATION, AND ANTIRESORPTION EFFECTS OF THE DISODIUM SALT" NATURWISSENSCHAFTEN, BERLIN, DE, Bd. 83, Nr. 12, 1996, Seiten 571-574, XP000866215
- LECOUVEY M ET AL: "A mild and efficient one-pot synthesis of 1-hydroxymethylene-1,1-bisp hosphonic acids. Preparation of new tripod ligands" TETRAHEDRON LETTERS, ELSEVIER SCIENCE PUBLISHERS, AMSTERDAM, NL, Bd. 42, Nr. 48, 26. November 2001 (2001-11-26), Seiten 8475-8478, XP004319796 ISSN: 0040-4039

## Beschreibung

Die vorliegende Erfindung betrifft ein Verfahren zur Herstellung von 1-Hydroxy-1,1-diphosphonsäureverbindungen.

Das Konzept des "drug-targeting", d. h. der gezielten Anreicherung von Arzneistoffen am Ort der gewünschten Wirkung ist eine in der Medizin und Pharmazie seit längeren angewandte Strategie. Von besonderem Interesse ist hierbei die Verwendung von Cytostatika, z. B. von N-Lost-Derivaten, wie Chlorambucil (4-(4-Bis-(2-chlorethyl)-amino)-phenylbuttersäure) gekoppelt an spezielle Alkandiphosphonsäuren. Durch die hohe Affinität der Diphosphonsäuren zum Apatit des Knochengerüstes wird eine gezielte Organspezifität erreicht. Die Stoffklasse solcher 1-Hydroxy-1,1-diphosphonsäureverbindungen, ihre Herstellung sowie ihre Verwendung als pharmakologische Zubereitung wird in der europäischen Patentschrift EP 0 170 896 B1 beschrieben.

Gemäß der EP 0 170 896 B1 werden die 1-Hydroxy-1,1-diphosphonsäureverbindungen aus den Carbonsäurechloriden durch Umsetzung mit H₃PO₃ in Gegenwart eines wasserabspaltenden Mittels mit Ausbeuten von ca. 50 % hergestellt.

Für den pharmazeutischen Einsatz müssen die 1-Hydroxy-1,1-diphosphonsäureverbindungen einen hohen Reinheitsgrad aufweisen, auch sind für das Herstellungsverfahren hohe Ausbeuten erwünscht.

Femer müssen die Verbindungen für den pharmazeutischen Einsatz eine gewisse Löslichkeit aufweisen. Die Löslichkeit dieser Verbindungen ist an sich sehr gering, des weiteren sind die Verbindungen zum Teil hydrolytisch instabil. Eine verbesserte Löslichkeit und somit eine höhere Konzentration in der pharmakologischen Zubereitung kann beispielsweise über Salze der entsprechenden Verbindungen erreicht werden. Nach dem Stand der Technik werden die entsprechenden Salze durch Neutralisation mit der äquivalenten Menge Lauge hergestellt. Dabei erfolgt die Isolierung der Salze durch Fällung mit organischen Lösungsmitteln, z. B. Alkoholen, durch Auskristallisieren oder durch Eindampfen der (teil)neutralisierten Lösung. Durch diese Verfahrensweise werden vielfach verfärbte Produkte erhalten. Auch zersetzen sich die Produkte teilweise, was eine verringerte Ausbeute zur Folge hat, auch sind die z. T. uncharakterisierten Zersetzungsprodukte gerade für die Anwendung im pharmazeutischen Sektor unerwünscht.

Zur Isolierung der Salze wird beispielsweise in der DE 198 20 974 A1 vorgeschlagen, die Salze mittels Gefriertrocknung zu isolieren.

Der vorliegenden Erfindung lag die Aufgabe zugrunde ein gegenüber dem Stand der Technik verbessertes Verfahren zur Herstellung von 1-Hydroxy-1,1-diphosphonsäureverbindungen zur Verfügung zu stellen, welches diese Verbindungen beispielsweise in höheren Ausbeuten liefert.

Gegenstand der vorliegenden Erfindung ist ein Verfahren zur Herstellung von 1-Hydroxy-1,1-diphosphonsäureverbindungen mit der allgemeinen Formel I und/oder deren pharmakologisch verträglichen Salzen 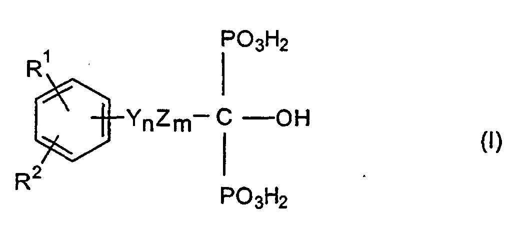 in der bedeuten
- R¹: Wasserstoff, OH, NO₂, Cl, F, Br, C₁-C₆-Alkyl, das auch mit Halogen, Amino und/oder Aminoalkyl substituiert sein kann, C₁₋₆-Alkoxy, Aryl, Heteroaryl, eine Gruppe NR³R⁴, in der R³ und R⁴ gleich oder verschieden sein können und für Wasserstoff, C₁-C₆-Alkyl, durch Halogen substituiertes Alkyl, Hydroxy-C₁-C₆-Alkyl stehen,
- R²: Wasserstoff, Halogen, Amino, das auch substituiert sein kann, C₁-C₆-Alkyl, das auch mit Halogen, Amino und/oder Aminoalkyl substituiert sein kann, C₁-C₆-Alkoxy, Aryl, Heteroaryl,
- Y: O, S oder NH;
- Z: C₁-C₅-Alkylen, die mit Aminogruppen substituiert sein können,
- m und n: 0 oder 1, mit der Maßgabe, dass, wenn n = 1, auch m = 1 ist,
worin eine Verbindung mit der Formel II 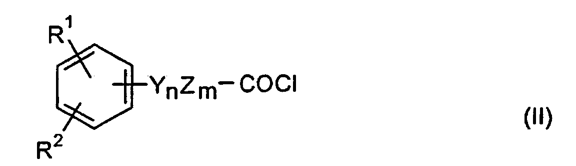 in der R¹, R², Y, Z, m und n wie oben definiert sind,
mit einer Verbindung mit der Formel III

P(OSiR⁵ ₃)₃₋ₚR⁶ ₚ (III)

In der bedeuten
- R⁵: eine C₁-C₄-Alkylgruppe,
- R⁶: eine C₁-C₆-Alkyloxygruppe,
- p: 0, 1 oder 2
umgesetzt, das Reaktionsprodukt in an sich bekannter Weise hydrolysiert und ggf. in die Salze überführt wird.

Das erfindungsgemäße Verfahren ermöglicht die Herstellung von 1-Hydroxy-1,1-diphosphonsäureverbindungen in hoher Ausbeute und einer solchen Reinheit, dass die Produkte auch in pharmakologischen Zubereitungen verwendet werden können. Auch die weitere Umsetzung zu den gut löslichen Salzen ist möglich.

In den Verbindungen mit der Formel I steht R¹ erfindungsgemäß für Wasserstoff, OH, NO₂, Cl, F, Br, C₁-C₆-Alkyl, das auch mit Halogen, Amino und/oder Aminoalkyl substituiert sein kann, C₁₋₆-Alkoxy, Aryl, Heteroaryl, eine Gruppe NR³R⁴, in der R³ und R⁴ gleich oder verschieden sein können und für Wasserstoff, C₁-C₆-Alkyl, durch Halogen substituiertes Alkyl, Hydroxy-C₁-C₆-Alkyl stehen. In einer bevorzugten Ausführungsform ist R¹ eine Gruppe NR³R⁴, in der R³ und R⁴ gleich sind und jeweils eine Halogen-substituierte C₁-C₆-Alkyl-Gruppe, vorzugsweise eine Gruppe -CH₂-CHR⁷Cl, wobei R⁷ für Wasserstoff oder eine Methylgruppe, vorzugsweise Wasserstoff, steht, bedeuten.

Bevorzugte Halogensubstituenten für R² sind Fluor, Chlor oder Brom. Bevorzugte Alkylreste bzw. Alkoxyreste für R² weisen nicht mehr als 5, insbesondere nicht mehr als 3 C-Atome auf, bevorzugt sind eine Methyl- oder Ethylgruppe. Die Alkylreste bzw. Alkoxyreste können ggf. substituiert sein, z. B. durch einen oder mehrere Aminogruppen. R² kann auch eine ggf. substituierte Aminogruppe darstellen. In einer besonders bevorzugten Ausführungsform steht R¹ für Wasserstoff, die Methyl-, Methoxy- oder Nitrogruppe.

Der Rest R¹ kann zu dem über Y an den aromatischen Ring gebundene Molekülteil können in o-, m- oder p-Stellung vorliegen. Wenn der Rest R¹ eine Aminogruppe ist, ist dieser Molekülteil vorzugsweise in p-Stellung gebunden, wobei R¹ dann eine sog. N-Lost-Gruppierung darstellt.

Erfindungsgemäß können m und n die Zahlenwerte 0 oder 1 darstellen, jedoch mit der Maßgabe, dass, wenn n = 1, d. h. einer der Reste O, S oder NH vorliegt, dann auch m = 1 ist. In einer bevorzugten Ausführungsform ist n = 0, d.h. der Rest Y entfällt. In dieser Ausführungsform kann auch n = 0 sein.

Besonders bevorzugt sind n = 0 und m = 1, d.h. der Alkylenrest Z ist unmittelbar an den aromatischen Ring gebunden. Dieser geradkettige oder verzweigte und gegebenenfalls substituierte Rest Z enthält vorzugsweise nicht mehr als 5 C-Atome, insbesondere nicht mehr als 3 C-Atome, wobei unverzweigte C-Ketten bevorzugt sind. Als Beispiel für einen möglichen Substituenten an Z ist eine Aminogruppe zu nennen. Bevorzugte Reste für Z sind die folgenden:
-CH₂-, -(CH₂)₂-, -(CH₂)₃-, -CHCH₃-CH₂-,

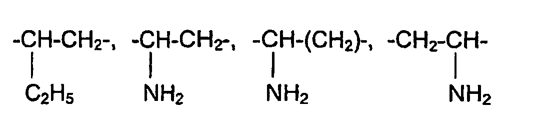

Eine besonders bevorzugte Verbindung mit der Formel I ist 4-(4-(Bis-(2-chlorethyl)-amino)-phenyl)-1-hydroxybutan-1,1-diphosphonsäure, die der Kürze halber als "CAD" (Chlorambucil gekoppelt an 1-Hydroxy-1,1-diphosphonsäure) bezeichnet wird.

Zur Herstellung der Verbindungen mit der Formel I werden erfindungsgemäß in einem ersten Reaktionsschritt als Ausgangsverbindungen die Carbonsäurederivate mit der Formel II mit einem Phosphorylierungsmittel der Formel III umgesetzt. Die Verbindungen mit der Formel II und der Formel III werden vorzugsweise in etwa stöchiometrischen Mengen umgesetzt. Stöchiometrisch heißt, dass die Ausgangsverbindungen etwa in einem molaren Verhältnis von 1 : 2 umgesetzt werden, wenn die Verbindung mit der Formel II keine Aminogruppe aufweist. Das molare Verhältnis der Verbindungen mit der Formel II zu den Verbindungen mit der Formel III beträgt vorzugsweise etwa 1 : 3, wenn die Verbindung mit der Formel II eine Aminogruppe enthält.

Um eine gute Vermischung der Reaktionspartner zu erreichen wird das Reaktionsgemisch vorzugsweise gerührt.

Die Umsetzung der Verbindung mit der Formel II mit einer Verbindung mit der Formel III kann über einen weiten Temperaturbereich von - 30°C bis 50 C durchgeführt werden. Vorzugsweise erfolgt die Umsetzung bei einer Temperatur von 10 bis 30°C. Temperaturen deutlich über Raumtemperatur sind wegen der Bildung von unerwünschten Nebenprodukten nicht bevorzugt.

Im erfindungsgemäßen Verfahren hat es sich als vorteilhaft erwiesen, die Verbindung mit der Formel II zunächst in einem geeigneten organischen Lösungsmittel zu lösen oder suspendieren und die Verbindung mit der Formel III, entweder als reine Verbindung oder ebenfalls in gelöster oder suspendierter Form, zuzugeben. Als Lösungsmittel zum Lösen der Verbindungen mit der Formel II bzw. III können polare oder unpolare organische Lösungsmittel wie Toluol, Benzol, Chlorbenzol, Pentan, Hexan, Heptan, Petrolether, Diethylether, Tetrahydrofuran

Nach Zugabe der Verbindung mit der Formel III ist es bevorzugt, das Reaktionsgemisch noch einige Zeit reagieren zu lassen. Hierzu kann die Temperatur ggf. etwas erhöht werden, wobei eine Nachreaktion bei Raumtemperatur bevorzugt ist.

Das im ersten Verfahrensschritt durch Umsetzung der Verbindungen mit den Formel II und III erhaltene Reaktionsprodukt kann nach Abschluß der Reaktion in an sich bekannter Weise isoliert oder direkt zur Diphosphonsäure weiter verarbeitet, d.h. hydrolysiert, werden. Vorzugsweise werden vor der Weiterverarbeitung flüchtige Reaktios(neben)produkte im Vakuum entfernt.

Die Hydrolyse des Reaktionsproduktes aus dem ersten Verfahrensschritt erfolgt in an sich bekannter Weise. Vorzugsweise wird das Reaktionsprodukt in einem der oben genannten organischen Lösungsmittel gelöst und Wasser wird, ggf. unter Rühren, zugegeben, wobei sich die Verbindung mit der Formel I bildet.

Die Verbindung mit der Formel I kann in an sich bekannter Weise isoliert und falls erforderlich gereinigt werden, indem das in der Regel unlösliche Reaktionsprodukt vom Lösungsmittel abfiltriert und ggf. mit Lösungsmittel gewaschen werden.

Für den Einsatz in pharmakologischen Zubereitungen werden die Verbindungen mit der Formel I vorzugsweise in Form ihrer löslichen Salze eingesetzt. Sowohl partielle Salze, in denen nur ein Teil der vier aciden Protonen durch andere Kationen ersetzt wird, als auch Vollsalze sowie Mischungen verschiedener Salze als auch Mischungen der freien Säuren mit Salzen können eingesetzt werden. Beispiele für pharmakologisch unbedenkliche Salze sind die Alkali-, Erdalkali- und/oder Ammoniumsalze, wie Natrium, Kalium-, Magnesium-, Ammonium- und substituierte Ammoniumsalze. Bevorzugt sind die annähernd neutral reagierende Salze, deren pH in wässeriger Lösung zwischen etwa 5 und 9 liegt. Besonders bevorzugt sind die teilneutralisierten Salze, wie die Mono-, Di- und Trinatriumsalze, und die vollneutralisierten Natrium-Salze der Verbindungen mit der Formel I.

Die Neutralisation der Verbindungen mit der Formel I kann in sich bekannter Weise durch Umsetzung mit den entsprechenden Basen erfolgen, wie es beispielsweise in der EP 0 170 896 A1 und in der DE 198 20 974 A1 beschrieben ist. Vorzugsweise werden die wässerigen Lösungen der entsprechenden Alkali-, Erdalkali- und Ammoniumverbindungen, wie Natrium, Kalium-, Magnesium- Ammonium- und substituierte Ammoniumverbindungen eingesetzt, wobei eine wässerige Natriumhydroxidlösung als Lauge besonders bevorzugt ist. Üblicherweise werden die 1-Hydroxy-1,1-diphosphonsäureverbindungen mit äquivalenter Menge an Lauge umgesetzt, so wird z. B. bei der Herstellung eines Tetranatriumsalzes die Lauge im 4-fachen molaren Verhältnis zur 1-Hydroxy-1,1-diphosphonsäureverbindungen eingesetzt. Entsprechend wird bei der Herstellung von Dinatriumsalzen mit einem 2-fachen molarem Verhältnis an Lauge gearbeitet. Dabei hat es sich als vorteilhaft erwiesen, dass die 1-Hydroxy-1,1-diphosphonsäureverbindungen in die kalte, vorzugsweise von 0°C bis Raumtemperatur, Lösung der Lauge eingerührt werden. In einer bevorzugten Ausführungsform wird hierbei unter O₂-Ausschluss gearbeitet und die Lösung anschließend auf Raumtemperatur erwärmt. Auch die Neutralisation mit einem Alkalihydrid ist möglich.

Die Neutralisation kann auch durch Eintragen der 1-Hydroxy-1,1-diphosphonsäureverbindungen in eine wässerige, kalte Natriumcarbonatlösung erfolgen, wobei äquivalente Mengen oder bis zu doppelte Mengen Natriumcarbonat (Na₂CO₃) eingesetzt werden. Eine weitere Möglichkeit der Herstellung der Salze besteht in der Verwendung von Ionenaustauschern.

In einer weiteren bevorzugten Ausführungsform wird zur Herstellung der Alkalisalze die Verbindung mit der Formel I mit dem entsprechenden Alkaliacetat, insbesondere dem Natriumacetat umgesetzt. Die Umsetzung wird vorzugsweise bei Raumtemperatur durchgeführt.

Das aus der (Teil)neutralisation erhaltene Produkt kann nach dem Entfernen der flüchtigen Reaktionsprodukte direkt weiterverarbeitet werden, eine aufwendige Isolierung ist in der Regel nicht erforderlich.

Verbindungen mit der Formel I, in denen R¹ Wasserstoff, Me, OMe, NH₂, NO₂ und R² Wasserstoff, Z eine Propylengruppe, n 0 und m 1 bedeuten, sind neu.

Ein weiterer Gegenstand der vorliegenden Erfindung ist demgemäß eine Verbindung mit der folgenden Formel IV: 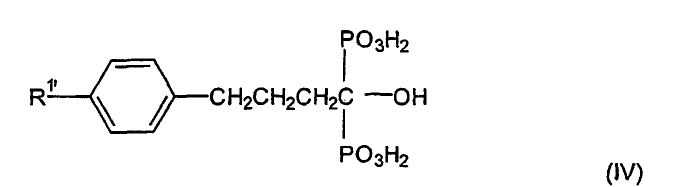 mit R^{1'} = H, Me, OMe, NH₂, NO₂.
und der Formel V 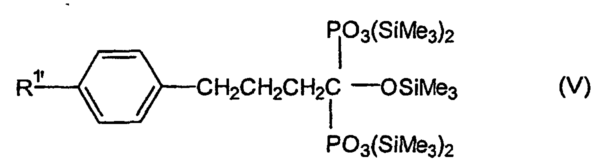 mit R^{1'} = H, Me, OMe, NH₂, NO₂.

### Beispiele

### Beispiel 1

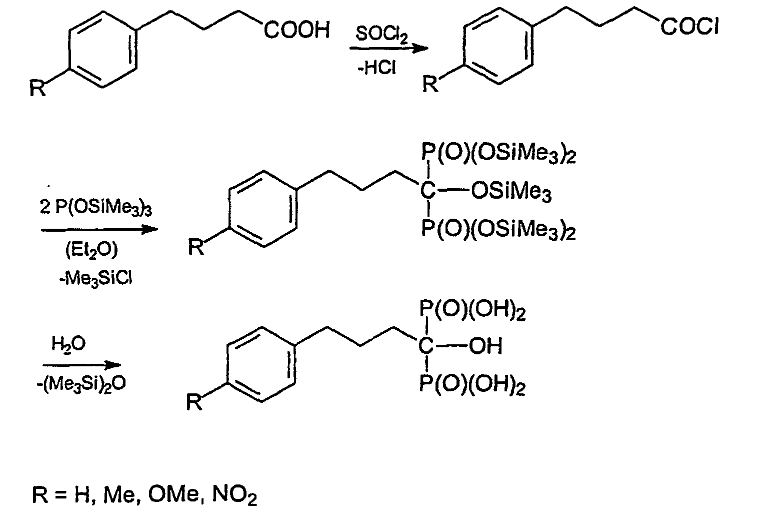

### 1.1 Darstellung der Säurechloride mit SOCl₂ nach in der Literatur bekannten Methode

Die entsprechenden Vorkehrungen zum Arbeiten unter Feuchtigkeits- und Sauerstoffausschluß wurden getroffen (trockener Diethylether, trockener und von Sauerstoff befreiter Stickstoff(Gas) als Inertgasatmosphäre).

### 1.2 Darstellung der Diphosphonsäuren über die persilylierten Derivate (für R = H, Me, OMe, NO₂)

Tris(trimethylsilyl)phosphit (Hata, T; Sekine, M; *J*. *Am. Chem. Soc*.; **96** (1974) 7363; Sekine, M; Okimoto, K, Yamada, K.; *J*. *Org*. *Chem.* **46** (1981) 2097) 6,7 ml (ca. 20 mmol) wurden zu einer Lösung des Säurechlorids (ca. 10 mmol) in 30 ml Diethylether gegeben, für 1-2 h gerührt und die flüchtigen Bestandteile bei 80-90°C im Wasserstrahlpumpenvakuum (20mbar) abgezogen. NMR (Et₂O) persilylierte Derivate: ³¹P: z.B. δ = 3,42 (R = H), 3,65 (R = NO₂).

Zum Rückstand wurden 10 ml Wasser gegeben unter Rühren für 1 h bei 80-90°C erhitzt und im Vakuum (0,1 mbar) zur Trockne abgepumpt. Der Rückstand wurde mit 10-15 ml Diethylether behandelt, der Niederschlag abfiltriert, mit einer kleinen Menge Diethylether gewaschen und getrocknet (für R = H, Me, NO₂). Im Falle von R = OMe wurde der Rückstand mit Ethylacetat behandelt, mit einem Minimum an Ethylacetat gewaschen und getrocknet. Für R = NO₂ enstand ein Diphosphonsäure-Diethylether-Komplex (1:1), der durch 2 h Erwärmen bei 80-90°C unter Pumpen bei 0,1 mbar in die reine Säure überführt wurde.
Schmp. Diphosphonsäure **R = H** (C₁₀H₁₆O₇P₂, 310,18) 183-185°C (Ausbeute 75% bezogen auf das entsprechende Säurechlorid); NMR: ¹H (DMSO-d₆): δ = 1,86 (m, 4H, C*H*₂C*H*₂CH₂), 2,51 (m, 2H, C*H*₂CO), 7,18 (m, 5H, Ph), 10.20 (5H, br, OH); ³¹P (DMSO-d₆): δ = 21,63 (³J_{RH} = 14,0 Hz). MS: (FAB, *m*/*z* %): FAB⁺ 311 (M⁺ + H); FAB⁻ 309 (M⁻ - H); **R = Me** (C₁₁H₁₈O₇P₂, 324,20) 175-177°C (71%) NMR: ¹H (DMSO-d₆): δ = 1,86 (m, 4H, C*H*₂C*H*₂CH₂), 2,24 (3H, Me), 2,44 (2H, C*H*₂CO), 7,04 (m, 4H, Ph), 9.06 (5H, br, OH); ³¹P (DMSO-dₛ): δ = 21,35 (³J_{PH} = 13,90 Hz). MS: (FAB, *m*/*z* %): FAB⁺ 325 (M⁺ + H); FAB⁻ 323 (M⁻ - H); **R = OMe** (C₁₁H₁₈O₈P₂, 340,20) 173-175°C (67%) NMR: ¹H (DMSO-d₆): δ = 1,88 (m, 4H, C*H*₂C*H*₂CH₂), 2,54 (2H, C*H*₂CO), 3,75 (3H, OMe), 6,90 (2H, AB, Ph), 7,10 (2H, AB, Ph), 10.15 (5H, br, OH); ³¹P (DMSO-d₆): δ = 21,22 (³J_{PH} = 13, 0 Hz). MS: (FAB, *m*/*z* %): FAB⁺ 341 (M⁺ + H) ; FAB⁻ 339 (M⁻ - H); **R = NO**_{**2**} 172-174°C (70%) (C₁₀H₁₅NO₉P₂, 355,17) NMR: ¹H (DMSO-d₆): δ = 1,90 (4H, C*H*₂C*H*₂CH₂), 2,69 (2H, C*H*₂CO), 6,50 (2H, AB, Ph), 8,15 (2H, AB, Ph), 10.37 (5H, br, OH); ³¹P (DMSO-d₆): δ = 21,15 (³J_{PH} = 13, 0 Hz). MS: (FAB, *m*/*z* %): FAB⁺ 356 (M⁺ + H) ; FAB⁻ 354 (M⁻ - H).

### Beispiel 2

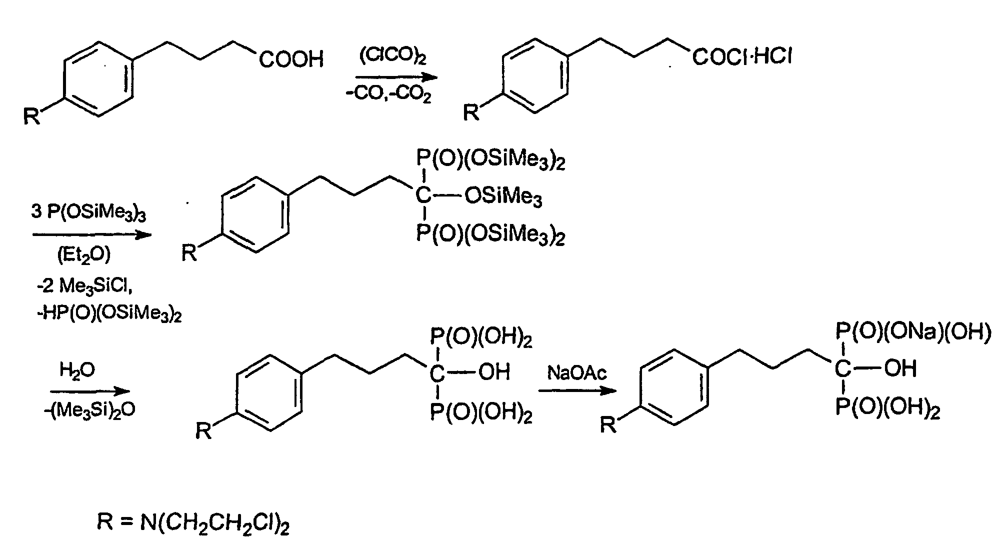

### 2.1 Darstellung von Chlorambucil-Hydrochlorid C₁₄H₁₉Cl₄NO [359.24] nach Firestone, R. A. et al., J. Med. Chem. 1984, 27 1037

Oxalylchlorid 5,2 ml (ca. 60 mmol) wurde zu einer gerührten Lösung von 1,82 g (ca. 6 mmol Chlorambucil in 30 ml Methylenchlorid bei 0°C gegeben zusammen mit einem Tropfen DMF (Dimethylformamid). Es wurde bei der gleichen Temperatur für 30 min gerührt, dann für 1.5 h bei Raumtemperatur und zur Trockne im Wasserbad (40-50°C) im Wasserstrahlpumpenvakuum (20 mbar) abgezogen, dann bei der gleichen Temperatur im Vakuum (0.1 mbar). Die Ausbeute an Chlorambucil-Hydrochlorid 2,16 g (schwach gelber Feststoff) war quantitativ.

### 2.2 Darstellung von persilylierter Chlorambucil-diphosphonsäure C₂₉H₆₃Cl₂NO₇P₂Si₅ [811,12]

Tris(trimethylsilyl)phosphit 6,0 ml (ca. 18 mmol) wurde unter Rühren zu einer Suspension des Säurechlorid-Hydrochlorids (ca. 6 mmol) in 30 ml Diethylether bei Raumtemperatur gegeben, für 1-2 h gerührt (nach 30-60 min verschwand die Suspension) und die flüchtigen Bestandteile für 2-3 h bei 80-90°C (0,1 mbar) abgezogen. Der Rückstand war eine ölige Flüssigkeit. Ausbeute 4,9 g, nahezu quantitativ. NMR (Et₂O): ³¹P: δ = 4,09.

### 2.3 Darstellung von Chlorambucil-diphosphonsäure C₁₄H₂₃Cl₂NO₇P₂ [450,19]

Zu der öligen Flüssigkeit aus **2.2** wurde 6 ml Wasser gegeben. Die Reaktionmischung wurde für 3-4 h belassen, bis der enstandene Feststoff verschwunden war, dann bei 45-50°C im Vakuum (0.1 mbar) getrocknet. Der zurückbleibende Feststoff wurde mit Ethylacetat zum Sieden erhitzt, dann abfiltriert und im Vakuum (0,1 mbar) wieder bei 45-50°C getrocknet. Schmp. 155-165°C, Ausbeute 2,7 g, nahezu quantitativ. NMR: ¹H (DMSO-d₆): δ = 1,80 (m, 4H, C*H*₂C*H*₂CH₂), 2,38 (m, 2H, C*H*₂CO), 3,66 (8H, CH₂), 6,66 (2 H, AB, Ph), 6,98 (2 H, AB, Ph), 9.50 (5H, br, OH); ³¹P (DMSO-d₆): δ = 21,48 (³J_{PH} = 14,0 Hz). MS: (FAB, *m*/*z*): FAB⁻ 448 (M⁻ - H).

### 2.4 Darstellung von Natrium-Chlorambucil-diphosphonat C₁₄H₂₂Cl₂NNaO₇P₂ [472,17]

Chlorambucil-diphosphonsäure (2.25 g, ca. 5 mmol) aus **2.3** wurde in 6 ml Wasser aufgeschlämmt und 0.95 g (7 mmol) Natriumacetat hinzugegeben und unter ständigem Rühren für 15-20 h belassen. Das weiße Produkt wurde abfiltriert, mit 3x1 ml Wasser und 3x5 ml Ethanol gewasschen, zunächst an der Luft dann im Vakuum bei 40°C getrocknet. Ausbeute 1.88 g (80%). NMR: ¹H (CF₃COOD): δ = 2,20 (m, 4H, C*H*₂C*H*₂CH₂), 2,80 (m, 2H, C*H*₂CO), 3,42 (2H, CH₂), 3,80 (2H, CH₂), 4,14 (4H, 2CH₂), 7,54 (4 H, br, Ph); ³¹P (CF₃COOD): δ = 22,38 (³J_{PH} = 14,0 Hz). MS: (FAB, *m*/*z* %): FAB⁺ 23 (Na⁺); FAB⁻ 470 (M⁻ -H).

## Patentansprüche

1. Verfahren zur Herstellung von 1-Hydroxy-1,1-diphosphonsäureverbindungen mit der allgemeinen Formel I und/oder deren pharmakologisch verträglichen Salzen 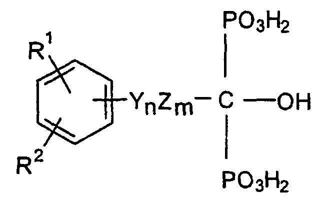 in der bedeuten
R¹ Wasserstoff, OH, NO₂, Cl, F, Br, C₁-C₆-Alkyl, das auch mit Halogen, Amino und/oder Aminoalkyl substituiert sein kann, C₁₋₆-Alkoxy, Aryl, Heteroaryl, eine Gruppe NR³R⁴, in der R³ und R⁴ gleich oder verschieden sein können und für Wasserstoff, C₁-C₆-Alkyl, durch Halogen substituiertes Alkyl, Hydroxy-C₁-C₆-Alkyl stehen,
R² Wasserstoff, Halogen, Amino, das auch substituiert sein kann, C₁-C₆-Alkyl, das auch mit Halogen, Amino und/oder Aminoalkyl substituiert sein kann, C₁-C₆-Alkoxy, Aryl, Heteroaryl,
Y O, S oder NH;
Z C₁-C₅-Alkylen, die mit Aminogruppen substituiert sein können,
m und n 0 oder 1, mit der Maßgabe, dass, wenn n = 1. auch m = 1 ist,
worin eine Verbindung mit der Formel II 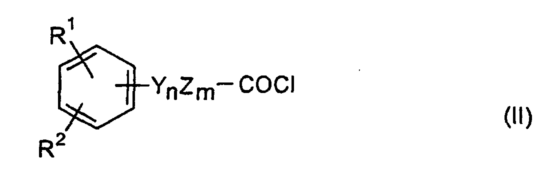 in der R¹, R², Y, Z, m und n wie oben definiert sind,
mit einer Verbindung mit der Formel III
P(OSiR⁵ ₃)₃₋ₚR⁶ ₚ (III)
In der bedeuten
R⁵ eine C₁-C₄-Alkylgruppe,
R⁶ eine C₁-C₆-Alkyloxygruppe,
p 0, 1 oder 2
umgesetzt, das Reaktionsprodukt in an sich bekannter Weise hydrolysiert und ggf. in die Salze überführt wird.

2. Verfahren nach Anspruch 1, **dadurch gekennzeichnet, dass** die Verbindung mit der Formel I 4-(4-(Bis-(2-chlorethyl)-amino)-phenyl)-1-hydroxybutan-1,1-diphosphonsäure ist.

3. Verfahren nach Anspruch 1 oder 2, **dadurch gekennzeichnet, dass** in Formel III p für 0 steht.

4. Verfahren nach einem der Ansprüche 1 bis 3, **dadurch gekennzeichnet, dass** die Verbindungen mit der Formel 11 und der Formel III in etwa stöchiometrischen Mengen umgesetzt werden.

5. Verfahren nach einem der Ansprüche 1 bis 4, **dadurch gekennzeichnet, dass** zur Herstellung der Salze die Verbindungen mit der Formel I mit wässerigen Lösungen der entsprechenden Alkali-, Erdalkali- und Ammoniumverbindungen, wie Natrium, Kalium-, Magnesium- Ammonium- und substituierten Ammoniumverbindungen, oder mit Alkaliacetat neutralisiert oder teilneutralisiert werden.

6. Verbindung mit der folgenden Formel (IV) 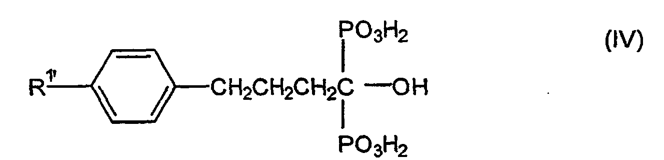 mit R^{1'} = H, Me, OMe, NH₂, NO₂.

7. Verbindung mit der folgenden Formel (V) 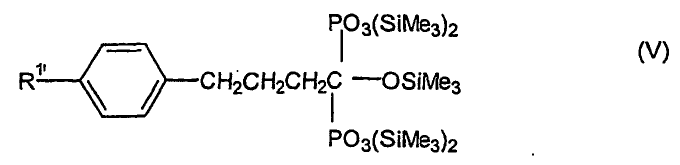 mit R^{1'} = H, Me, OMe, NH₂, NO₂.

## Revendications

1. Procédé de préparation de composés d'acide 1-hydroxy-1,1-diphosphonique de formule générale I et/ou de leurs sels pharmaceutiquement compatibles. 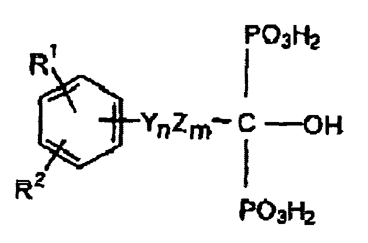 dans laquelle,
R¹ représente de l'hydrogène, OH, NO₂, Cl, F, Br, un alkyle en C₁-C₆ pouvant aussi être substitué par un halogène, un amino et/ou un aminoalkyle, un alkoxy en C₁-C₆, un aryle, un hétéroaryle, un groupe NR³R⁴, dans lequel R³ et R⁴ peuvent être identiques ou différents et représentent un hydrogène, un alkyle en C₁-C₆, un alkyle substitué par un halogène, un hydroxyalkyle en C₁-C₆,
R² représente de l'hydrogène, un halogène, un amino pouvant aussi être substitué, un alkyle en C₁-C₆ pouvant également être substitué par un halogène, un amino et/ou un aminoalkyle, un alkoxy en C₁-C₆, un aryle, un hétéroaryle,
Y représente O, S ou NH,
Z représente un alkylène en C₁-C₅, pouvant être substitué par des groupes amino,
m et n sont égaux à 0 ou 1, sous réserve que si n = 1, m = 1,
dans lequel un composé de formule II 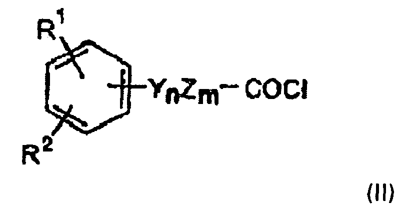 dans laquelle R¹, R^{2,} Y, Z, m et n sont définis comme ci-dessus,
est mis en réaction avec un composé de formule (III)
P(OSiR⁵ ₃)₃₋ₚR⁶ ₚ (III)
dans laquelle
R⁵ représente un groupe alkyle en C₁-C₄,
R⁶ représente un groupe alkyloxy en C₁-C₆,
p est égal à 0,1 ou 2,
et le produit de la réaction est hydrolysé de matière connue et éventuellement transformé en sels.

2. Procédé selon la revendication 1, **caractérisé en ce que** le composé de formule I est de l'acide 4-(4-bis(2-chloroéthyl)-amino)-phényl)-1-hydroxybutane-1,1-diphosphonique.

3. Procédé selon la revendication 1 ou 2, **caractérisé en ce que**, dans la formule III, p est égal à O.

4. Procédé selon une des revendications 1 à 3, **caractérisé en ce** les composés de formule II et de formule III sont mis en réaction en des quantités approximativement stoechiométriques.

5. Procédé selon une des revendications 1 à 4, **caractérisé en ce que**, pour préparer les sels, on neutralise complètement ou en partie les composés de formule I avec des solutions aqueuses des composés alcalins, alcalino-terreux où d'ammonium correspondants, tels que des composés de sodium, de magnésium, d'ammonium et d'ammonium substitués, ou avec de l'acétate alcalin.

6. Composé ayant la formule suivante (IV) 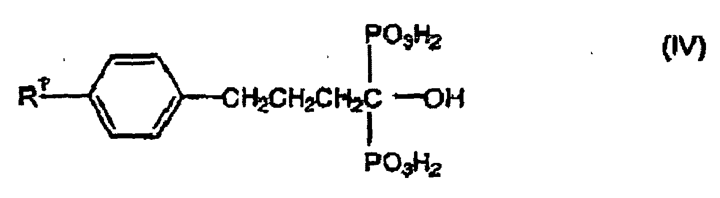 dans laquelle R^{1'} = H, Me, OMe, NH₂, NO₂.

7. Composé ayant la formule suivante (V) 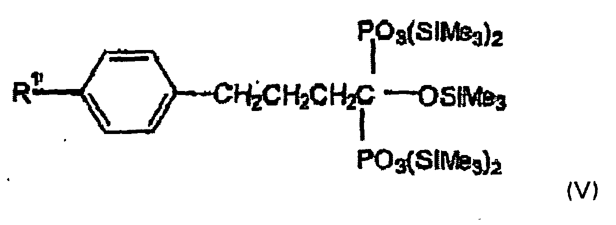 dans laquelle R^{1'} = H, Me, OMe, NH₂, NO₂.

## Claims

1. Process for preparing 1-hydroxy-1,1-diphosphonic acid compounds having the general formula I and/or the pharmacologically acceptable salts thereof 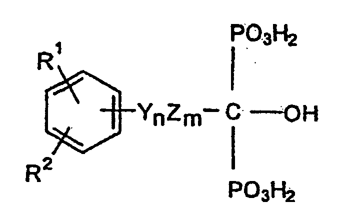 in which
R¹ is hydrogen, OH, NO₂, Cl, F, Br, C₁-C₆-alkyl, which may also be substituted by halogen, amino and/or aminoalkyl, C₁-C₆-alkoxy, aryl, heteroaryl, a group NR³R⁴, in which R³ and R⁴ may be identical or different and are hydrogen, C₁-C₆-alkyl, halogen-substituted alkyl, hydroxy-C₁-C₆-alkyl,
R² is hydrogen, halogen, amino, which may also be substituted, C₁-C₆-alkyl, which may also be substituted by halogen, amino and/or aminoalkyl, C₁-C₆-alkoxy, aryl, heteroaryl,
Y is O, S or NH,
Z is C₁-C₅-alkylene, which may be substituted by amino groups,
m and n are 0 or 1, with the proviso that if n = 1, m is also = 1,
wherein a compound having the formula II 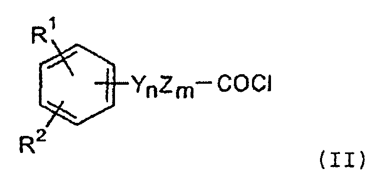 in which R¹, R², Y, Z, m and n are as defined above, is reacted with a compound having the formula III
P(OSiR⁵ ₃)₃₋ₚR⁶ ₚ (III)
in which
R⁵ is a C₁-C₄-alkyl group,
R⁶ is a C₁-C₆-alkyloxy group,
p is 0, 1 or 2,
the reaction product is hydrolysed in a manner known per se and possibly converted to the salts.

2. Process according to Claim 1, **characterized in that** the compound having the formula I is 4-(4-(bis-(2-chloroethyl)amino)phenyl)-1-hydroxybutane-1,1-diphosphonic acid.

3. Process according to Claim 1 or 2, **characterized in that** in formula III, p is 0.

4. Process according to any of Claims 1 to 3, **characterized in that** the compounds having the formula II and the formula III are reacted in approximately stoichiometric amounts.

5. Process according to any of Claims 1 to 4, **characterized in that** in order to prepare the salts, the compounds having the formula I are neutralized or partially neutralized with aqueous solutions of the corresponding alkali, alkaline-earth and ammonium compounds, such as sodium, potassium, magnesium, ammonium and substituted ammonium compounds, or with alkaline acetate.

6. Compound having the following formula (IV) 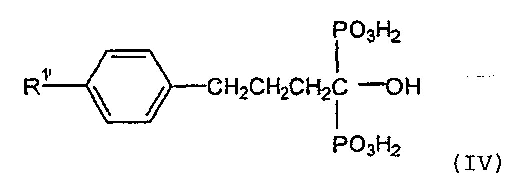 where R^{1'} = H, Me, OMe, NH₂, NO₂.

7. Compound having the following formula (V) 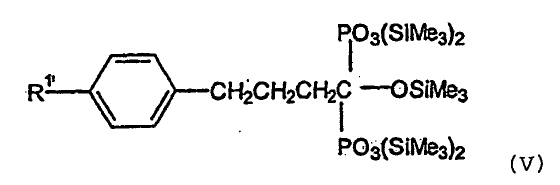 where R^{1'} = H, Me, OMe, NH₂, NO₂.
